# EUROPÄISCHE PATENTSCHRIFT

(11) **EP 1 998 980 B1**
(45) Veröffentlichungstag und Bekanntmachung des Hinweises auf die Patenterteilung: **13.08.2014**
(21) Anmeldenummer: 07703244.9
(22) Anmeldetag: 03.02.2007
(51) Int. Cl.: B60R 9/04

(54) **DACHRELING FÜR EIN KRAFTFAHRZEUG SOWIE VERFAHREN ZUR HERSTLLUNG EINER DACHRELING**
ROOF RACK FOR A MOTOR VEHICLE, AND METHDOR FOR PRODUCING A ROOF RACK
GALERIE DE TOIT POUR VÉHICULE AUTOMOBILE, ET PROCÉDÉ DE PRODUCTION D'UNE TELLE GALERIE

(30) Priorität: 16.03.2006 DE 102006012050
(43) Veröffentlichungstag der Anmeldung: 10.12.2008
(73) Patentinhaber: Hans und Ottmar Binder GmbH Oberflächenveredelung, 89558 Böhmenkirch (DE)
(72) Erfinder: BINDER, Hans, 89558 Böhmenkirch (DE); BINDER, Ottmar, 89558 Böhmenkirch (DE)
(74) Vertreter: Grosse, Rainer
(86) Internationale Anmeldenummer: PCT/EP2007/000933
(87) Internationale Veröffentlichungsnummer: WO 2007/104388

(56) Entgegenhaltungen:
- EP-A1- 0 645 282
- EP-A1- 1 348 597
- WO-A-2005/100092
- DE-A1- 4 240 080
- DE-U1- 9 315 848

## Beschreibung

Die Erfindung betrifft eine Dachreling für Kraftfahrzeuge gemäß Anspruch 1. Ferner betrifft die Erfindung ein Verfahren zur Herstellung einer Dachreling für Kraftfahrzeuge gemäß Anspruch 5.

Eine Dachreling der eingangs genannten Art ist bekannt. Sie wird dem Dach eines Kraftfahrzeugs zugeordnet, um Lasten befestigen zu können. Die bekannte Dachreling weist einen sich über die Dachlänge erstreckenden Galeriestab auf, der zumindest bereichsweise mit Abstand zum Kraftfahrzeugdach verläuft und mittels mindestens eines Stützelements, das sich zwischen Galeriestab und Kraftfahrzeugdach befindet, abgestützt wird. Galeriestab und Stützelement sind als separate Bauteile ausgebildet. Sie werden bevorzugt aneinander befestigt. Ferner erfolgt bevorzugt eine Befestigung des Stützelements am Kraftfahrzeugdach. Der Galeriestab wird vorzugsweise im Strangpressverfahren hergestellt. Das mindestens eine, einen Fuß bildende Stützelement wird als Gussteil oder Schmiedeteil gefertigt.

Der Erfindung liegt die Aufgabe zugrunde, eine Dachreling für Kraftfahrzeuge der eingangs genannten Art zu schaffen, die einfach und kostengünstig herstellbar und optisch ansprechend ist. Ferner liegt der Erfindung die Aufgabe zugrunde, ein entsprechendes Verfahren zu schaffen.

Diese Aufgabe wir erfindungsgemäß durch die Merkmale der Ansprüche 1 sowie 5 gelöst. Durch das erfindungsgemäße Vorgehen lassen sich Galeriestab und Stützelement sehr preisgünstig erstellen, da das gleiche Herstellungsverfahren für beide Bauteile zum Einsatz kommt. Das Stützelement weist eine Form und Kontur auf, die durch den Strangpressprozess vorgegeben wird, also gleichbleibende Querschnittskonturen in Pressrichtung. Da die beiden Bauteile dem gleichen Herstellungsverfahren unterliegen, wirken sie bezüglich ihrer Oberfläche optisch identisch, sodass eine erfindungsgemäß hergestellte Dachreling optisch sehr einheitlich wirkt. Da keine Abweichungen in der Oberflächenstruktur vorliegen ergibt sich ein gleichförmiges Erscheinungsbild.

Nach einer Weiterbildung der Erfindung ist vorgesehen, dass Galeriestab und Stützelement aus gleichem Material, insbesondere aus Aluminium oder einer Aluminiumlegierung, bestehen. Der Einsatz gleichen Materials senkt Lager- und Herstellungskosten und birgt Vorteile für die Folgeprozesse, zum Beispiel Oberflächenbearbeitungen, da die gleichen Prozesse eingesetzt werden können.

Ferner ist es vorteilhaft, wenn Galeriestab und Stützelement aufgrund gleicher Oberflächenbehandlung die gleiche Oberflächenausbildung aufweisen. Schleifprozesse, Polierprozesse, Bürstprozesse, Eloxierprozesse und so weiter können bei beiden Bauteilen, also bei Galeriestab und Stützelement in gleicher Weise angewendet und durchgeführt werden, was zu einer Produktionsoptimierung führt. Beispielsweise können die für den Eloxalprozess zu verwendenden elektrolytischen Bäder die gleiche Zusammensetzung aufweisen, sodass keine zusätzlichen Bäder für die unterschiedlichen Bauteile erforderlich sind.

Zur Querkraftaufnahme ist erfindungsgemäß vorgesehen, dass das Stützelement zwei Stützstufen und der Galeriestab zwei Gegenstützstufen aufweist, wobei Stützstufen und Gegenstützstufen aneinander liegen. Durch Querbeschleunigungen des Kraftfahrzeugs werden von der auf die Dachreling wirkenden Dachlast Querkräfte erzeugt, mit der Folge, dass der Galeriestab quer zur Fahrtrichtung des Fahrzeugs relativ zum Stützelement beansprucht wird. Dies hat zur Folge, dass -neben Kräften, die in Fahrtrichtung oder gegen Fahrtrichtung wirken- auch entsprechende Querkräfte, also quer zur Fahrtrichtung, zwischen Galeriestab und Stützelement auftreten. Hinzu kann der Umstand treten, dass die Auflageflächen von Stützelement zu Galeriestab nicht horizontal verlaufen, sondern seitlich geneigt liegen. Diese Neigung resultiert oftmals aus Design-und/oder Karosserievorgaben. In extrem Lastwechselfällen wird hierdurch ein "Abrutschen" des Galeriestabs vom Stützelement unterstützt. Durch die erwähnte Stützstufe, die mit der Gegenstützstufe zusammenwirkt, wird ein Hintergriff erzeugt, der zumindest dazu führt, dass in einer Querrichtung, zum Beispiel nach außen, die beiden Teile in Formschluss stehen. Ferner ist eine Stützstufe und Gegenstützstufe in der entsprechend anderen Richtung an Stützelement und Galeriestab ausgebildet, sodass sowohl quer zur Fahrtrichtung nach außen und quer zur Fahrtrichtung nach innen jeweils ein Hintergriff und damit ein Formschluss besteht.

Erfindungsgemäß ist vorgesehen, dass die Stützstufen und die Gegenstützstufen Strangpressstufen sind. Sie werden demzufolge beim Strangpressprozess mit ausgebildet, sodass keine zusätzliche Bearbeitung erforderlich ist, um die Stützstufen beziehungsweise die Gegenstützstufen herzustellen.

Jede Stützstufe ist als ein Längsvorsprung ausgebildet. Dieser wird beim und durch den Strangpressprozess mit ausgebildet. Er ragt in

Richtung des Galeriestabs und verläuft hinsichtlich seiner Längserstreckung in Strangpressrichtung.

Jede Gegenstützstufe ist als eine Längsnut ausgebildet. Auch hier wird beim Strangpressprozess und durch diesen die Längsnut mit erzeugt, sodass sie in Strangpressrichtung verläuft.

Bevorzugt weist der Galeriestab gebogene, Stützfüße bildende Endbereiche auf. Die beiden Endbereiche nähern sich demzufolge dem Fahrzeugdach in Bogenform, wobei das jeweilige Ende des Galeriestabs am Fahrzeugdach befestigt wird. Die Ausbildung der gebogenen Endbereiche erfolgt nach dem Strangpressen dadurch, dass ein Biegevorgang, Streckbiegevorgang oder Rollbiegevorgang am Galeriestab durchgeführt wird. In der Zone zwischen den beiden gebogenen Endbereichen weist der Galeriestab den bereits erwähnten Abstand zum Fahrzeugdach auf, der durch mindestens ein Stützelement überbrückt wird. Vorzugsweise werden mehrere, beabstandet zueinanderliegende Stützelemente -über die Länge der Dachreling verteilt- eingesetzt, die den Galeriestab abstützen. Es ist auch möglich, Stützelemente vorzusehen, die nicht oder nicht nur aus Lastabtragungsgründen erforderlich sind, sondern auch oder nur aus optischen Erwägungen eingesetzt werden. Auch eine Mischform, also das Vorsehen von mindestens einem Stützelement aus Lastgründen und das Vorsehen von mindestens einem Stützelement aus optischen Gründen ist vom Gegenstand der Erfindung erfasst.

Die Erfindung betrifft ferner ein Verfahren zur Herstellung einer Dachreling für Kraftfahrzeuge gemäß Anspruch 5.

Zur Querkraftaufnahme werden am Stützelement zwei Stützstufen und am Galeriestab zwei Gegenstützstufen jeweils im Strangpressprozess erstellt. Ferner werden bevorzugt Galeriestab und Stützelement in gleicher Weise hinsichtlich ihrer Oberfläche behandelt. Insbesondere werden beide Bauteile eloxiert, wobei die gleichen elektrolytischen Behandlungsbäder zum Einsatz kommen.

Die Zeichnung veranschaulichen die Erfindung anhand eines Ausführungsbeispiels und zwar zeigt:
- Figur 1: eine perspektivische Ansicht einer Dachreling für ein Kraftfahrzeug,
- Figur 2: einen Querschnitt entlang der Linie II-II in Figur 1,
- Figur 3: einen Querschnitt entlang der Linie III-III in Figur 1,
- Figur 4: einen Querschnitt entlang der Linie IV-IV in Figur 1,
- Figur 5: einen Querschnitt entlang der Linie V-V in Figur 1 und
- Figur 6: einen Querschnitt entlang der Linie VI-VI in Figur 1.

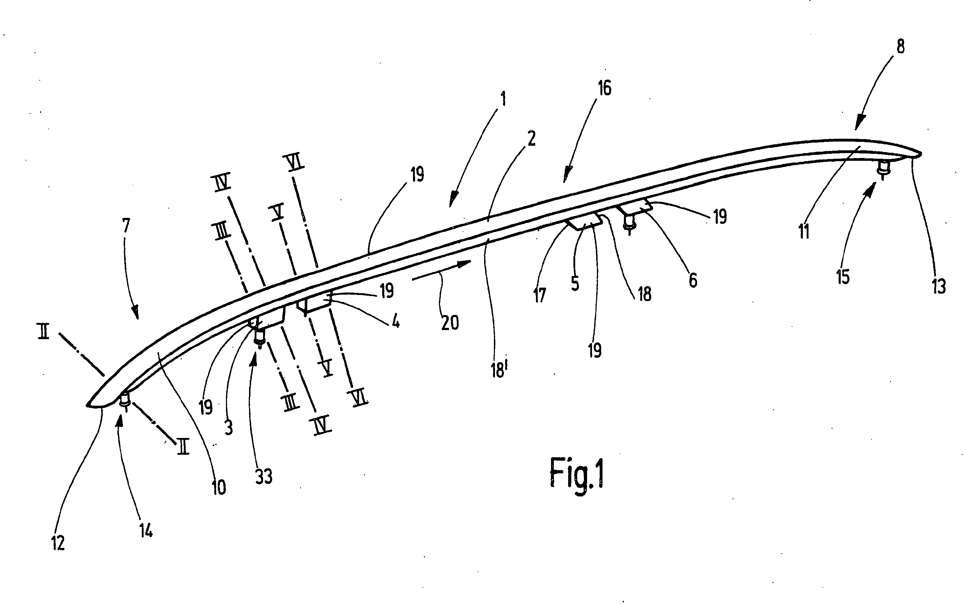

Die Figur 1 zeigt eine Dachreling 1, die einen Galeriestab 2 sowie vier Stützelemente 3, 4, 5 und 6 aufweist. Vorzugsweise wird jeweils eine Dachreling in den beiden Seitenbereichen des Dachs eines Kraftfahrzeugs befestigt. Nachstehend wird der Einfachheit halber jedoch nur auf eine Dachreling 1 eingegangen. Der Galeriestab 2 weist in seinen Endbereichen 7 und 8 jeweils gebogene Abschnitte 10 und 11 auf, wobei sich die Enden 12 und 13 des Galeriestabs 2 bis auf das in der Figur 1 nicht dargestellte Kraftfahrzeugdach erstrecken. Jedes Ende 12, 13 ist mit einem Befestigungselement 14, 15 versehen, um die Festlegung am Kraftfahrzeugdach vornehmen zu können.

Zwischen den beiden gebogenen Abschnitten 10 und 11 weist der Galeriestab 2 eine dem Verlauf des Kraftfahrzeugsdach etwa angepasste Form in Längserstreckung auf, wobei er in dieser Zone 16 (zwischen den Abschnitten 10 und 11) mit Abstand zum Fahrzeugdach verläuft. Dieser Abstand wird mittels der vier Stützelemente 3 bis 6 überbrückt, wobei die beiden Stützelemente 3 und 4 geringfügig beabstandet zueinander liegen und dem Endbereich 7 zugeordnet sind und die Stützelemente 5 und 6 relativ nahe zueinander beabstandet liegen und dem Endbereich 8 zugeordnet sind. Es ist erkennbar, dass die Stirnseiten 17 und 18 der Stützelemente 3 bis 6 nicht rechtwinklig zur Unterseite 18' des Galeriestabs 2 verlaufen, sondern -aus Designgründen- stumpf oder spitzwinklig zur Unterseite 18' liegen.

Der Galeriestab 2 und die Stützelemente 3 bis 6 sind jeweils als Strangpressbauteile 19 hergestellt, wobei die Strangpressrichtung 20 in Figur 1 angedeutet ist, das heißt, sie liegt beim Galeriestab in Längserstreckung und bei den Stützelementen 3 bis 6 ebenfalls in Längserstreckung vor, wobei im montierten Zustand gemäß der Figur 1 die Längserstreckungen der Stützelemente 3 bis 6 parallel zur Längserstreckung des Galeriestabs 2 verlaufen. Nachdem der Galeriestab 2 stranggepresst wurde, werden die Endbereiche 7 und 8 gebogen, um die gebogenen Abschnitte 10 und 11 zu erhalten. Schließlich werden die Enden 12 und 13 durch ein entsprechendes Abschneiden erzeugt. Sofern der Galeriestab 2 zum Folgen der Dachkontur des Kraftfahrzeugs in der Zone 16 nicht geradlinig, sondern ebenfalls leicht gebogen verläuft, wird ferner auch hier eine Biegung erzeugt. Die stranggepressten Stützelemente 3 bis 6 werden durch Ablängen eines entsprechenden Strangpressprofils, vorzugsweise stranggepresstem Vollprofil, gewonnen. Liegen Galeriestab 2 und Stützelemente 3 bis 6 nunmehr als Strangpresshalbzeuge vor, so erfolgt eine mechanische Bearbeitung, um Befestigungselemente aufzunehmen, die dazu dienen, die Stützelemente 3 bis 6 am Galeriestab 2 zu befestigen und den Galeriestab 2 sowie die Stützelemente 3 bis 6 am Autodach befestigen zu können. Hierauf wird nachstehen noch näher eingegangen.

Die insoweit als Strangpresshalbzeug vorliegenden Bauteile werden aus gleichem Material, vorzugsweise aus Aluminium oder einer Aluminiumlegierung, durch Strangpressen erstellt. Die folgenden Herstellungsprozesse können optimiert durchgeführt werden, da sowohl der Galeriestab als auch die Stützelemente 3 bis 6 der gleichen Oberflächenbearbeitung unterzogen werden, nämlich Schleifen, Bürsten und/oder Polieren und anschließend Eloxieren. Anstelle des oder zusätzlich zum Eloxieren kann auch eine Beschichtung vorgenommen werden. Aufgrund der Materialgleichheit und des gleichen Herstellungsprozesses durch Strangpressen wirken nach der Oberflächenbehandlung die Oberflächen von Galeriestab 2 und den Stützelementen 3 bis 6 optisch völlig identisch, sodass sich ein sehr harmonisches optisches Bild einstellt.

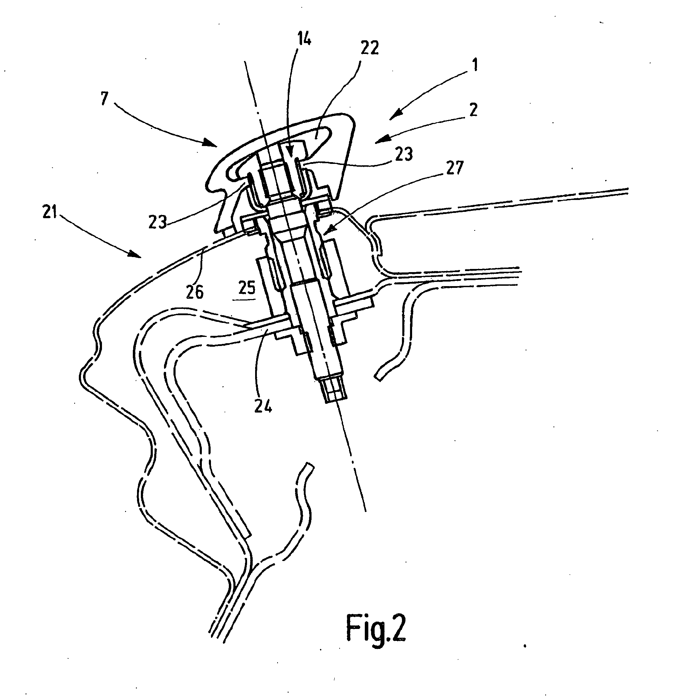

In den Figuren 2 bis 6 sind Querschnitte durch den Profilstab 2 beziehungsweise durch Profilstab 2 und dem jeweiligen Stützelement 3 bis 6 dargestellt, wobei auch jeweils ein Abschnitt eines Kraftfahrzeugdachs 21 mit abgebildet ist. Es ist erkennbar, dass der Galeriestab 2 als Hohlprofil mit einem inneren Hohlraum 22 erstellt wurde, wobei der Hohlraum 22 beim Strangpressen mit ausgebildet wird. Zwei eine Querschnittsverengung erzeugende Vorsprünge 23 in dem Hohlraum 22, die ebenfalls beim Strangpressen mit ausgebildet werden, dienen zum Angreifen des Befestigungselements 14 (Figur 2), das stiftförmig ausgebildet ist und den Galeriestab 2 im Endbereich 7 fest mit einem im Innern des Kraftfahrzeugsdachs 21 liegenden Halteprofil 24 verbindet, wobei ein Zwischenraum 25 zum Dachblech 26 mittels eines verstellbaren Abstandhalters 27 des Befestigungselements 14 überbrückt wird.

Im Endbereich 8 liegt eine entsprechende Ausbildung vor, die der der Figur 2 entspricht, wobei anstelle des Befestigungselements 14 das Befestigungselement 15 zum Einsatz gelangt. Es wird daher auf die Ausführungen gemäß Befestigungselement 14 verwiesen.

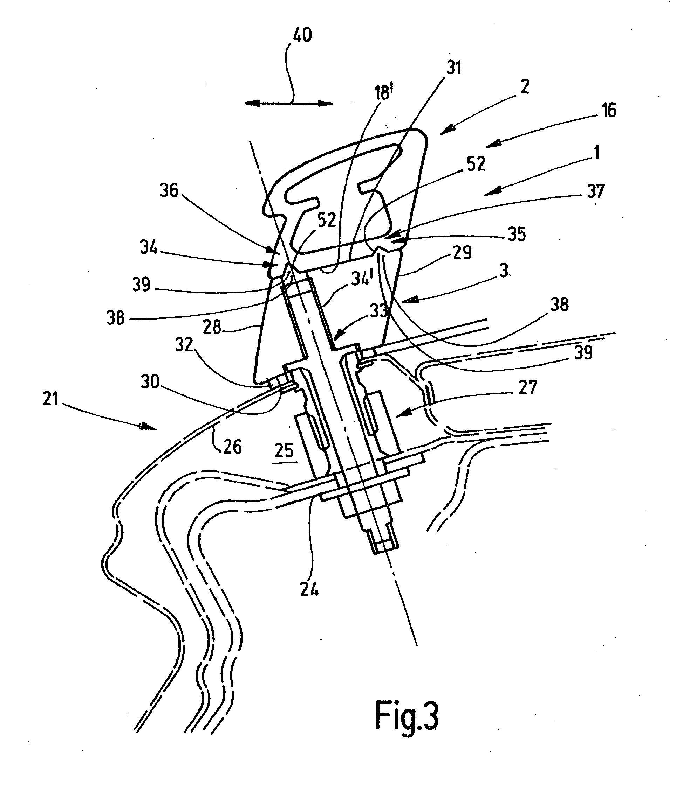

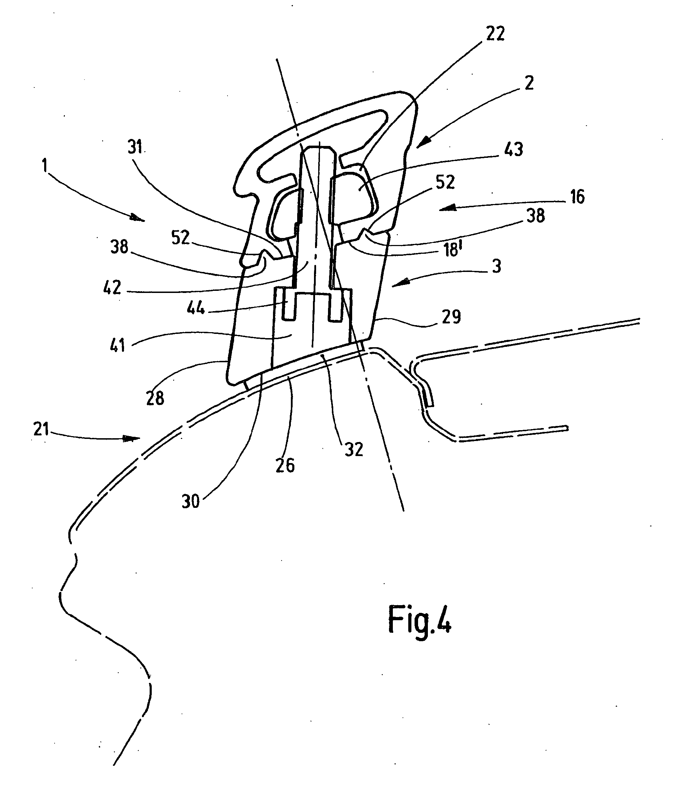

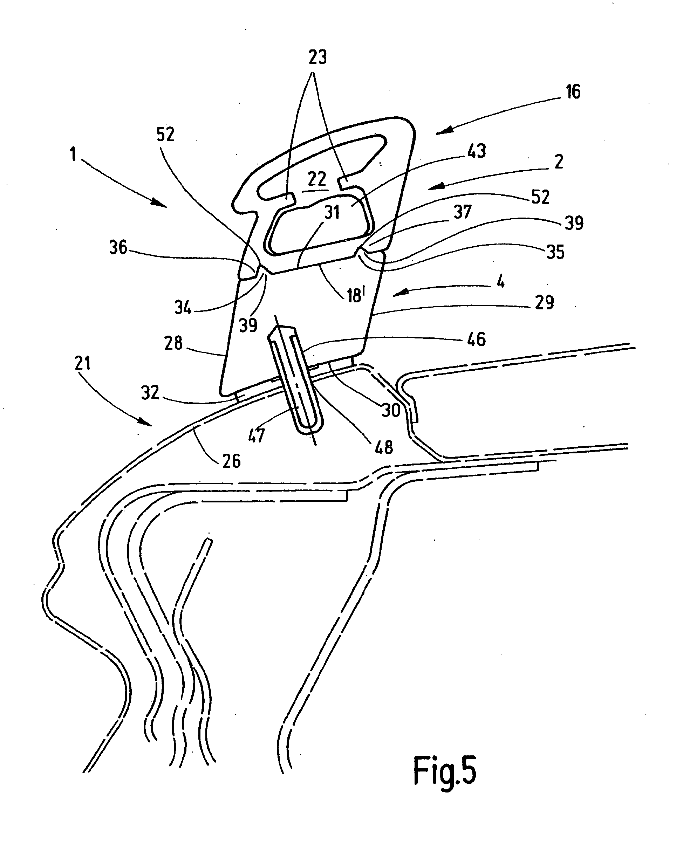

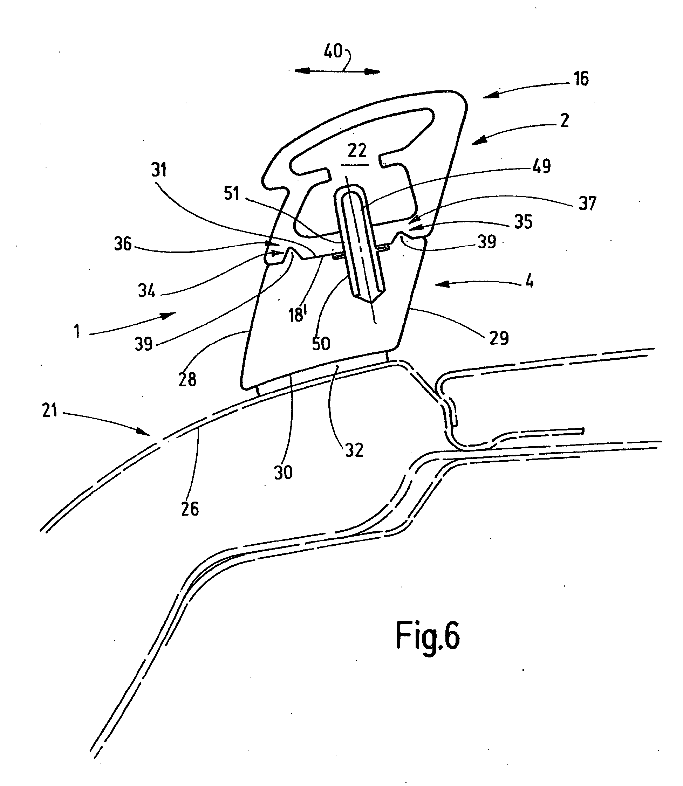

Die Figuren 3 und 4 zeigen Querschnitte durch die Dachreling 1 im Bereich des Stützelements 3; die Figuren 5 und 6 betreffen Querschnitte durch die Dachreling 1 im Bereich des Stützelements 4. Die Querschnittsausbildung des Stützelements 4 entspricht im Wesentlichen der des Stützelements 3, sodass auf die entsprechenden Ausführungen verwiesen wird. Die Querschnittsausbildung im Bereich des Stützelements 5 entspricht im Wesentlichen der der Figuren 5 und 6, sodass auf diese sowie den zugehörigen Text verwiesen wird. Entsprechendes gilt für die Querschnittsausbildung im Bereich des Stützelements 6, die der jeweiligen Ausbildung der Figuren 3 beziehungsweise 4 entspricht. Es wird insoweit auf diese Figuren nebst Text verwiesen.

Die Figur 3 zeigt, dass sich der Galeriestab 2 der Dachreling 1 über das Stützelement 3 am Kraftfahrzeugdach 21 abstützt. Das Stützelement 3 weist Seiten 28 und 29 sowie eine Unterseite 30 als auch eine Oberseite 31 auf. Insgesamt ergibt sich eine Querschnittsfläche nach Art eines Rombus beziehungsweise verschobenen Quadrats, wobei sich die Unterseite 30 unter Zwischenschaltung einer Dichtung 32 am Dachblech 26 abstützt und ein Befestigungselement 33 vorgesehen ist, das in eine Gewindebohrung 34' des Stützelements 3 von unten her, also von der Unterseite 30 her, eingeschraubt ist und unter Zwischenschaltung eines Abstandshalters 27 mit einem Halteprofil 24 verschraubt ist. Hierdurch wird das Stützelement 3 sicher am Kraftfahrzeugdach 21 festgelegt. Die Oberseite 31 weist zwei Stützstufenausbildungen 34 und 35 auf, die mit Gegenstützstufenausbildungen 36 und 37 zusammenwirken, die an der Unterseite 18' des Galeriestabs 2 ausgebildet sind. Die Stützstufenausbildungen 34 und 35 weisen jeweils ein Stützstufe 38 in Form eines Längsvorsprungs 39 auf, wobei sich die beiden Längsvorsprünge 39 über die gesamte, in Richtung der Längserstreckung des Galeriestabs 2 verlaufende Längserstreckung des Stützelements 3 erstrecken. Die beiden Längsvorsprünge 39 verlaufen parallel mit Abstand zueinander. Sie sind -ebenso wie die Seiten 28 und 29 sowie die Unterseite 30 und Oberseite 31- entsprechend der in der Figur 3 wiedergegebenen Querschnittskontur beim Strangpressprozess mit ausgebildet worden. Die an der Unterseite 18' des Galeriestabs 2 ausgebildeten Gegenstützstufenausbildungen 36, 37 sind als Gegenstützstufen 52 in Form von parallel zueinander verlaufenden Längsnuten ausgebildet, in die formangepaßt die Längsvorsprünge 39 eingreifen. Die Längsnuten werden beim Strangpressen des Galeriestabs 2 mit ausgebildet. Durch die so geschaffene Verzahnung von Galeriestab 2 und Stützelement 3 wird mindestens ein Formschluss erzielt, der Querkräfte (Doppelpfeil 40), die quer zur Längserstreckung des Galeriestabs 2 verlaufen, aufnimmt, ohne dass es zu einem relativen Verrutschen von Galeriestab 2 und Stützelement 3 kommt. Dieser Formschluss besteht auch zwischen dem Galeriestab 2 und den Stützelementen 4, 5 und 6 in entsprechender Weise. Wie Galeriestab 2 und Stützelement 3 etwa in Richtung der Längserstreckung des Befestigungselements 33 miteinander verbunden sind, ergibt sich aus der Figur 4.

Aus der Figur 4 ist ersichtlich, dass -benachbart zum Befestigungselement 33 (vergleiche Figur 1 und 3)- eine Stufenbohrung 41 im Stützelement 3 ausgebildet ist, in die eine Gewindeschraube 42 eingreift, die in ein mit Gewindebohrung versehenen Nutstein 43 eingeschraubt ist, der sich im Hohlraum 22 des Galeriestabs 2 befindet. Der Kopf 44 der Gewindeschraube 42 stützt sich an dem im Durchmesser kleineren Bereich der Stufenbohrung 41 ab und liegt versenkt zur Unterseite 30.

Ein Vergleich der Figuren 3 und 4 zeigt, dass die Richtungen der Längsverläufe vom Befestigungselement 33 und Gewindeschraube 42 unter einem spitzen Winkel zueinander stehen.

Gemäß Figur 1 befindet sich mit Abstand neben dem Stützelement 3 das Stützelement 4, wobei dieses nur aus optischen Gründen vorgesehen ist und deshalb sowohl mit dem Galeriestab 2 als auch mit dem Kraftfahrzeugdach 21 nicht so hoch belastbar verbunden sein muss. Wichtig ist nur, dass es seine Position zwischen Kraftfahrzeugdach 21 und der Unterseite 18' des Galeriestabs 2 stets beibehält. Hierzu ist gemäß Figur 5 vorgesehen, dass das Stützelement 4 an seiner Unterseite 30 eine Aufnahmebohrung 46 für einen Stehbolzen 47 aufweist, der in ein Stehbolzenloch 48 des Fahrzeugdachs 21, insbesondere des Dachblechs 26 eingreift. Bei dem Stützelement 4 sind ebenfalls Stützstufenausbildungen 34 und 35, wie bereits vorstehend bei der Figur 3 beschrieben -ausgebildet-, die mit den Gegenstützstufenausbildungen 36 und 37 -wie ebenfalls bei der Figur 3 bereits beschrieben- zusammenwirken. Ferner ist -gemäß Figur 6- beabstandet zum Stehbolzen 47 ein Stehbolzen 49 zwischen Galeriestab 2 und Stützelement 4 vorgesehen, der sich in einer Aufnahmebohrung 50 des Stützelements 4 befindet und in eine Haltebohrung 51 des Galeriestabs 2 eingreift. Der Stehbolzen 49 ist von außen nicht sichtbar, da er an der Stoßfläche von der Oberseite 31 des Stützelements 4 und der Unterseite 18' des Galeriestabs 2 liegt.

Zusätzlich oder alternativ ist es möglich, dass Stützelement 4 und Galeriestab 2 entsprechend der Ausgestaltung der Figur 4 miteinander verschraubt sind. Hierzu ist in der Figur 5 angedeutet, dass sich im Hohlraum 22 ein Nutstein 43 befindet, wobei die zugehörige Gewindeschraube 42 aufgrund der Schnittlage jedoch in den Figuren 5 und 6 nicht sichtbar ist.

Aufgrund des erfindungsgemäßen Vorgehens ist eine Dachreling 1 ausgebildet, bei der Galeriestab 2 und die Stützelemente 3 bis 6 kostengünstig hergestellt werden können und optisch ein völlig identisches Erscheinungsbild mit sich bringen. Ferner liegt eine formschlüssige Verbindung zwischen Galeriestab 2 und den Stützelementen 3 bis 6 aufgrund der Stützstufenausbildungen 34 und 35 und Gegenstützstufenausbildungen 36 und 37 vor.

Wie bereits erwähnt, werden Galeriestab 2 und die Stützelemente 3 bis 6 als Aluminiumstrangpressprofile oder Aluminiumlegierungs-Strangpressprofile hergestellt. Durch die Nut-/Federausbildung zwischen Galeriestab 2 und dem jeweiligen Stützelement 3 bis 6 aufgrund der erwähnten Stützstufenausbildungen 34, 35 und Gegenstützstufenausbildungen 36, 37 lässt sich eine optimale Verbindung erzielen, die bereits beim jeweiligen Strangpressprozess mit ausgebildet wird. Aufgrund der gleichen Herstellungsart und der Materialgleichheit bei dem Galeriestab 1 und den Stützelementen 3 bis 6 ist auch im Folgeprozess ein Optimierungspotential verfügbar, da sämtliche Bauteile in gleicher Art und Weise hinsichtlich der Oberfläche behandelt werden können, insbesondere in gleicher Weise poliert und auch in gleicher Weise eloxiert werden. Für den Eloxalprozess können gleiche Bäderzusammensetzungen bei identischen Produktionszeiten verwendet werden. Die führt zu einer sehr schlanken und schnellen Fertigung bei optisch gleichem Erscheinungsbild. Aufgrund von Karosserievorgaben des Kraftfahrzeugs und/oder Designvorgaben liegt die aus den Figuren 3 bis 6 hervorgehende "eingedrehte" Neigung vor, d.h., Galeriestab 2 und die Stützelemente 3 bis 6 liegen nicht horizontal flächig aufeinander, sondern es liegt eine geneigte Berührungszone vor, sodass auftretende Kräfte zu entsprechenden geneigten Komponenten führen, die ein Abrutschen "begünstigen" würden. Aufgrund der erfindungsgemäßen Stützstufenausbildungen 34, 35 und Gegenstützstufenausbildungen 36 und 37 ist auch bei extremen Lastwechselfällen eine optimale Ableitung der Energie gegeben, sodass stets eine feste Verbindung vorliegt. Ferner lassen sich aufgrund dieser Ausbildung auch extrem große Kräfte problemlos ableiten, ohne dass es zu einer Gefährdung der sich auf der Dachreling 1 befindenden Dachlast kommt.

## Patentansprüche

1. Dachreling (1) für Kraftfahrzeuge, mit mindestens einem Galeriestab (2) und mindestens einem dem Galeriestab (2) zugeordneten Stützelement (3,4,5,6), wobei Galeriestab (2) und Stützelement (3,4,5,6) als separate Bauteile ausgebildet sind, Galeriestab (2) und Stützelement (3,4,5,6) als Strangpressbauteile ausgebildet sind und zur Querkraftaufnahme das Stützelement (3,4,5,6) zwei Stützstufen (38) und der Galeriestab (2) zwei Gegenstützstufen (52) aufweist, wobei die Stützstufen (38) und die Gegenstützstufen (52) aneinander liegen und die Stützstufen (38) und die Gegenstützstufen (52) Strangpressstufen sind, und wobei die Oberseite (31) des Stützelements (3,4,5,6) die Stützstufen (38) aufweist, die mit den Gegenstützstufen (52) zusammenwirken, die an der Unterseite (18') des Galeriestabs (2) ausgebildet sind, wobei jede Stützstufe (38) in Form eines Längsvorsprungs (39) ausgebildet ist, die beiden Längsvorsprünge (39) sich über die gesamte, in Richtung der Längserstreckung des Galeriestabs (2) verlaufende Längserstreckung des Stützelements (3,4,5,6) erstrecken und parallel mit Abstand zueinander verlaufen, und wobei die an der Unterseite (18') des Galeriestabs (2) ausgebildeten Gegenstützstufen (52) in Form von parallel zueinander verlaufenden Längsnuten ausgebildet sind, in die formangepasst die Längsvorsprünge (39) eingreifen.

2. Dachreling nach Anspruch 1, **dadurch gekennzeichnet, dass** Galeriestab (2) und Stützelement (3,4,5,6) aus gleichem Material, insbesondere aus Aluminium oder einer Aluminiumlegierung, bestehen.

3. Dachreling nach einem der vorhergehenden Ansprüche, **dadurch gekennzeichnet, dass** Galeriestab (2) und Stützelement (3,4,5,6) aufgrund gleicher Oberflächenbehandlung die gleiche Oberflächenausbildung aufweisen.

4. Dachreling nach einem der vorhergehenden Ansprüche, **dadurch gekennzeichnet, dass** der Galeriestab (2) gebogene, Stützfüße bildende Endbereiche (7,8) aufweist.

5. Verfahren zur Herstellung einer Dachreling (1) für Kraftfahrzeuge, wobei die Dachreling (1) mindestens einen Galeriestab (2) und mindestens ein dem Galeriestab (2) zugeordnetes Stützelement (3,4,5,6) aufweist, Galeriestab (2) sowie Stützelement (3,4,5,6) als separate Bauteile ausgebildet werden, Galeriestab (2) und Stützelement (3,4,5,6) als Strangpressbauteile ausgebildet werden und zur Querkraftaufnahme das Stützelement (3,4,5,6) mit zwei Stützstufen (38) und der Galeriestab (2) mit zwei Gegenstützstufen (52) versehen werden, wobei die Stützstufen (38) und die Gegenstützstufen (52) aneinander liegen und die Stützstufen (38) und die Gegenstützstufen (52) als Strangpressstufen hergestellt werden, und wobei die Stützstufen (38) an der Oberseite (31) des Stützelements (3,4,5,6) ausgebildet werden, die mit den Gegenstützstufen (52) zusammenwirken, die an der Unterseite (18') des Galeriestabs (2) ausgebildet werden, wobei jede Stützstufe (38) in Form eines Längsvorsprungs (39) ausgebildet wird, die beiden Längsvorsprünge (39) sich über die gesamte, in Richtung der Längserstreckung des Galeriestabs (2) verlaufende Längserstreckung des Stützelements (3,4,5,6) erstreckend und parallel mit Abstand zueinander verlaufend ausgebildet werden, und wobei die an der Unterseite (18') des Galeriestabs (2) ausgebildeten Gegenstützstufen (52) in Form von parallel zueinander verlaufenden Längsnuten ausgebildet werden, in die formangepasst die Längsvorsprünge (39) eingreifen.

6. Verfahren nach Anspruch 5, **dadurch gekennzeichnet, dass** an dem Galeriestab (2) und dem Stützelement (3,4,5,6) die gleiche Oberflächenbearbeitung durchgeführt wird.

7. Verfahren nach einem der vorhergehenden Ansprüche, **dadurch gekennzeichnet, dass** Galeriestab (2) und das Stützelement (3,4,5,6) prozessgleich eloxiert werden.

8. Verfahren nach Anspruch 7, **dadurch gekennzeichnet, dass** Galeriestab (2) und Stützelement (3,4,5,6) in die gleichen, insbesondere elektrolytischen Behandlungsbäder für das Eloxieren eingebracht werden.

## Claims

1. A roof railing (1) for motor vehicles, having at least one rack bar (2) and at least one support element (3,4,5,6) associated with the rack bar (2), wherein the rack bar (2) and support element (3,4,5,6) are provided as separate components; the rack bar (2) and support element (3,4,5,6) being provided as extruded components and the support element (3,4,5,6) having two support steps (38) and the rack bar (2) having two counter-support steps (52) for absorption of a lateral force, wherein the support steps (38) and the counter-support steps (52) contact one another, and the support steps (38) and the counter-support steps (52) are extruded steps; and wherein the top side (31) of the support element (3,4,5,6) provides the support steps (38), which cooperate with the counter-support steps (52) that are provided on the underside (18') of the rack bar (2); wherein each support step (38) is provided in the form of a longitudinal projection (39), both longitudinal projections (39) extend over the entire longitudinal extension of the support element (3,4,5,6) running in the direction of the longitudinal extension of the rack bar (2) and run in parallel at a distance from one another; and wherein the counter-support steps (52) are provided on the underside (18') of the rack bar (2) in the form of parallel longitudinal grooves into which the longitudinal projections (39) engage in a shape-adapted manner.

2. The roof railing according to claim 1, **characterized in that** rack bar (2) and support element (3,4,5,6) are made of the same material, in particular of aluminium or an aluminium alloy.

3. The roof railing according to any of the preceding claims, **characterized in that** rack bar (2) and support element (3,4,5,6) have the same surface design as a result of an identical surface treatment.

4. The roof railing according to any of the preceding claims, **characterized in that** the rack bar (2) has curved end regions (7,8) which form support feet.

5. A method for manufacturing a roof railing (1) for motor vehicles, wherein the roof railing (1) has at least one rack bar (2) and at least one support element (3,4,5,6) associated with the rack bar (2), rack bar (2) and support element (3,4,5,6) are formed as separate components, rack bar (2) and support element (3,4,5,6) are formed as extruded components and the support element (3,4,5,6) is provided with two support steps (38) and the rack bar (2) with two counter-support steps (52) for absorption of a lateral force, wherein the support steps (38) and the counter-support steps (52) contact one another, and the support steps (38) and the counter-support steps (52) are manufactured as extruded steps; and wherein the support steps (38) are formed at the top side (31) of the support element (3,4,5,6), which cooperate with the counter-support steps (52) that are formed on the underside (18') of the rack bar (2); wherein each support step (38) is formed in the form of a longitudinal projection (39), both longitudinal projections (39) are formed to extend over the entire longitudinal extension of the support element (3,4,5,6) running in the direction of the longitudinal extension of the rack bar (2) and run in parallel at a distance from one another; and wherein the counter-support steps (52) formed on the underside (18') of the rack bar (2) are formed in the form of parallel longitudinal grooves into which the longitudinal projections (39) engage in a shape-adapted manner.

6. The method of claim 5, **characterized in that** the same surface finishing is performed on the rack bar (2) and the support element (3,4,5,6).

7. The method according to any of the preceding claims, **characterized in that** rack bar (2) and support element (3,4,5,6) are anodized with a common process.

8. The method according to claim 7, **characterized in that** rack bar (2) and support element (3,4,5,6) are introduced into common treatment baths, in particular electrolytic treatment baths, for anodising.

## Revendications

1. Galerie de toit (1) pour véhicules automobiles, avec au moins une barre de galerie (2) et au moins un élément d'appui (3, 4, 5, 6) associé à la barre de galerie (2), la barre de galerie (2) et l'élément d'appui (3, 4, 5, 6) étant configurés en tant qu'éléments séparés, la barre de galerie (2) et l'élément d'appui (3, 4, 5, 6) étant configurés en tant qu'éléments extrudés, l'élément d'appui (3, 4, 5, 6) présentant deux étapes d'appui (38) et la barre de galerie (2) présentant deux étapes de contre-appui (52) pour absorber les forces transversales, les étapes d'appui (38) et les étapes de contre-appui (52) étant adjacentes et les étapes d'appui (38) et les étapes de contre-appui (52) étant des étapes extrudées, et la face supérieure (31) de l'élément d'appui (3, 4, 5, 6) présentant les étapes d'appui (38) qui coopèrent avec les étapes de contre-appui (52) formées sur la face inférieure (18') de la barre de galerie (2), chaque étape d'appui (38) étant configurée sous forme d'une saillie longitudinale (39), les deux saillies longitudinales (39) s'étendant en parallèle et avec une distance l'une vers l'autre et le long l'extension longitudinale totale de l'élément d'appui (3, 4, 5, 6) qui s'étend dans la direction de l'extension longitudinale de la barre de galerie (2), et les étapes de contre-appui (52) formées sur la face inférieure (18') de la barre de galerie (2) étant configurées sous forme de rainures longitudinales s'étendant en parallèle, dans lesquelles se mettent en prise de manière conformée les saillies longitudinales (39).

2. Galerie de toit selon la revendication 1, **caractérisée en ce que** la barre de galerie (2) et l'élément d'appui (3, 4, 5, 6) sont constitués de la même matière, notamment d'aluminium ou d'une alliage d'aluminium.

3. Galerie de toit selon l'une quelconque des revendications précédentes, **caractérisée en ce que** la barre de galerie (2) et l'élément d'appui (3, 4, 5, 6) présentent la même configuration de surface, grâce au même traitement de surface.

4. Galerie de toit selon l'une quelconque des revendications précédentes, **caractérisée en ce que** la barre de galerie (2) présente des parties d'extrémité (7, 8) incurvées qui forment des pieds d'appui.

5. Procédé pour la fabrication d'une galerie de toit (1) pour véhicules automobiles, la galerie de toit (1) présentant au moins une barre de galerie (2) et au moins un élément d'appui (3, 4, 5, 6) associé à la barre de galerie (2), la barre de galerie (2) et l'élément d'appui (3, 4, 5, 6) étant configurés en tant qu'éléments séparés, la barre de galerie (2) et l'élément d'appui (3, 4, 5, 6) étant configurés en tant qu'éléments extrudés, et, pour absorber les forces transversales, l'élément d'appui (3, 4, 5, 6) étant pourvu avec deux étapes d'appui (38) et la barre de galerie (2) avec deux étapes de contre-appui (52), les étapes d'appui (38) et les étapes de contre-appui (52) étant adjacentes et les étapes d'appui (38) et les étapes de contre-appui (52) étant fabriquées en tant qu'étapes extrudées, les étapes d'appui (38) étant configurée sur la face supérieure (31) de l'élément d'appui (3, 4, 5, 6) et coopérant avec les étapes de contre-appui (52) qui sont formées sur la face inférieure (18') de la barre de galerie (2), chaque étape d'appui (38) étant configurée sous forme d'une saillie longitudinale (39), les deux saillies longitudinales (39) s'étendant en parallèle et avec une distance l'une vers l'autre et le long l'extension longitudinale totale de l'élément d'appui (3, 4, 5, 6) qui s'étend dans la direction de l'extension longitudinale de la barre de galerie (2), et les étapes de contre-appui (52) formées sur la face inférieure (18') de la barre de galerie (2) étant configurées sous forme de rainures longitudinales s'étendant en parallèle, dans lesquelles se mettent en prise de manière conformée les saillies longitudinales (39).

6. Procédé selon la revendication 5, **caractérisé en ce que** la barre de galerie (2) et l'élément d'appui (3, 4, 5, 6) sont soumis au même traitement de surface.

7. Procédé selon l'une quelconque des revendications précédentes, **caractérisé en ce que** la barre de galerie (2) et l'élément d'appui (3, 4, 5, 6) sont anodisées dans le même procédé.

8. Procédé selon la revendication 7, **caractérisé en ce que** la barre de galerie (2) et l'élément d'appui (3, 4, 5, 6) sont introduits dans les mêmes bains de traitement, notamment des bains électrolytiques pour l'anodisation.
